Europäisches Patentamt

(19) European Patent Office

Office européen des brevets

(11) Veröffentlichungsnummer: **0 002 770**
**B1**

(12) **EUROPÄISCHE PATENTSCHRIFT**

(45) Veröffentlichungstag der Patentschrift: **17.10.84**

(21) Anmeldenummer: **78101743.9**

(22) Anmeldetag: **18.12.78**

(51) Int. Cl.³: **B 23 K 7/10, B 23 K 7/00**

(54) **Verfahren zur Demonstration von thermischen Schneidvorgängen.**

(30) Priorität: **04.01.78 DE 2800245**

(43) Veröffentlichungstag der Anmeldung:
**11.07.79 Patentblatt 79/14**

(45) Bekanntmachung des Hinweises auf die
Patenterteilung:
**17.10.84 Patentblatt 84/42**

(84) Benannte Vertragsstaaten:
**BE CH FR NL**

(56) Entgegenhaltungen:
**FR-A-2 295 812**
**GB-A- 829 046**
**GB-A-1 026 191**
**US-A-2 753 175**
**US-A-3 306 597**

**An article entitled "Closed-circuit TV aids slot
milling operations" as published in Machinery
and production engineering, 19 February 1975**

(73) Patentinhaber: **Linde Aktiengesellschaft
Abraham-Lincoln-Strasse 21
D-6200 Wiesbaden (DE)**

(72) Erfinder: **Mair, Hermann
Mangfallstrasse 9
D-8000 München 90 (DE)**
Erfinder: **Bahmann, Holger
Auweg 10f
D-8046 Garching (DE)**
Erfinder: **Grassmugg, Karl R.
Raimundstrasse 11
A-4910 Ried/Innkr. (AT)**

(74) Vertreter: **Schaefer, Gerhard, Dr.
Linde Aktiengesellschaft Zentrale
Patentabteilung
D-8023 Höllriegelskreuth (DE)**

Courier Press, Leamington Spa, England.

EP 0 002 770 B1

**Beschreibung**

Die Erfindung betrifft ein Verfahren zur Demonstration von thermischen Schneidvorgängen.

Bei Schneidvorgängen, deren Schnittqualität von mehreren Parametern abhängig ist, kann eine optimale Abstimmung der Schneidparameter bisher nur mit Hilfe einer Vielzahl von Versuchsreihen erreicht werden. Jede Änderung eines Parameters bedingt einen neuen Schnitt, der zudem erst nach Beendigung des Schneidvorganges vollständig beurteilt werden kann. Eine genaue, zeitlich unbeschränkte Beobachtung während des Schneidvorganges ist unmöglich.

Beispielsweise werden Brennschneiddüsen anhand vieler Brennschneidversuche und durch Erstellen von zugehörigen Schneidtabellen überprüft und konstruiert. Zur Erstellung von Schneidtabellen ist aber für jeden Blechdickenbereich und die jeweils entsprechende Schneiddüse eine Versuchsreihe erforderlich, um bei guter Schnittqualität die optimale Schneidgeschwindigkeit, den günstigsten Schneidsauerstoff-, Heizsauerstoff- und Brenngasverbrauch zu ermitteln.

Es ist daher von Nachteil, einen Schneidvorgang nicht während, sondern erst nach Anschluß des Vorganges beurteilen zu können. Wenn überhaupt, so ist bisher ein Beobachten des Schneidvorganges lediglich in der Schneidrichtung und unter perspektivischer Verzerrung (Beobachtungsrichtung schräg zur Werkzeugebene) möglich. Zur direkten Beobachtung des Schnittes sind zudem meist Sicherheitsvorkehrungen erforderlich, die eine Gefährdung des Schneidpersonals ausschließen sollen.

Aufgabe der Erfindung ist daher, eine Verfahren zur Demonstration von thermischen Schneidvorgängen zu schaffen, durch das der Einfluß von Schneidparametern auf die Schnittqualität leicht und schnell ermittelt und bei dem der Schneidvorgang selbst deutlich beobachtet werden kann.

Diese Aufgabe wird erfindungsgemäß dadurch gelöst, daß an einem rotierenden, kreisscheibenförmigen Werkstück mittels einer Schneideinheit ein sich vom Werkstück spiralförmig abwickelnder Span abgetrennt oder ein Besäumschnitt durchgeführt wird, wobei die Schneideinheit nach Beendigung einer Rotation des Werkstückes automatisch um die Spanbreite und/oder um die Schnittbreite dem Werkstück nachgeführt wird, und daß der Schneidvorgang mittels einer Kamera beobachtet und bzw. oder aufgenommen wird, wobei die Kamera im Winkelbereich zwischen Werkstückrand und Span bzw. bei einem Besäumschnitt zwischen dem in Schneidrichtung vor und dem hinter der Schneidstelle liegenden Bereich des Werkstückrandes angeordnet und auf die Schneidstelle gerichtet ist.

Zur Demonstration von thermischen Schneidvorgängen dient erfindungsgemäß ein kreisscheibenförmiges Werkstück, das z.B. durch einen Drehtisch in Rotation versetzt wird. Eine im Randbereich des Werkstückes angeordnete Schneideinheit schält einen Span einstellbarer Stärke spiralförmig vom Umfang des Werkstückes ab.

War bisher die Beobachtung eines Schneidvorganges nur unter perspektivischer Verzerrung von ober- bzw. unterhalb des Werkstückes möglich, so ist nun eine Beobachtung in der Werkstückebene möglich, da zwischen dem abgeschälten Span und dem Werkstückrand ein für die Beobachtung der Schneidstelle genügend großer Winkel besteht.

Besonders günstige Beobachtungsmöglichkeiten ergeben sich bei der Ausführung von Besäumschnitt, d.h. von Schnitten, die so nahe am Werkstückrand ausgeführt werden, daß ein Span gerade nicht mehr abgetrennt wird. Die Schneideinheit entfernt nur das einer Schnittbreite entsprechende Material vom Umfang des Werkstückes. Die Schneidstelle ist daher auf der dem Werkstück abgewandten Seite der Schneideinheit unverdeckt und kann daher ausgezeichnet und aus verschiedenen Richtungen (in Schneidrichtung, aber auch gegen die Schneidrichtung) beobachtet werden.

Zur direkten Beobachtung z.B. eines Brennschneidvorganges wäre jedoch ein Augenschutz notwendig und viele Detailinformationen gingen der Beurteilung bei schnell ablaufenden Schneidvorgängen verloren. Daher erfolgt die Beobachtung des Schneidvorganges mit besonderem Vorteil indirekt über eine Kamera, die an einen Monitor angeschlossen ist. Damit wird nicht nur jede durch den Schneidvorgang bedingte Gefährdung des Beobachters ausgeschlossen, vielmehr können alle einem Video-System eigenen Vorteile, wie etwa die Möglichkeiten der Aufzeichnung, der Vergrößerung und der Wiederholbarkeit genutzt werden.

Eine erfindungsgemäße Anlage zur Demonstration von Schneidvorgängen kann sehr kompakt gebaut werden, ermöglicht aber dennoch einen "unendlich" langen, d.h. nur durch Schnittbreite, Spanbreite und Durchmesser des Werkstückes bestimmten Schnitt und somit einen großen Beobachtungszeitraum. Diese Eigenschaften erlauben die Ermittlung von Arbeitsparametern sogar im Laborbereich. Eine weitere Vereinfachung bietet eine weitgehende Automatisierung der Brenner- und Kameraeinstellung: nach jeder vollandeten Umdrehung des Werkstückes werden Brenner und im entsprechenden Maß auch die Kamera dem geänderten Durchmesser des Werkstückes angepaßt, d.h. nachgeführt. Der Beobachter des Schneidvorganges hat sich nur auf den Vergleich der extern einzustellenden Schneidparameter und des resultierenden Schneidergebnisses zu konzentrieren und kann über einen langen Zeitraum beurteilen. War bisher pro Schnitt eine konstante Einstellung der Schneidparameter Voraussetzung und daher aus ökonomischen Gründen die Zahl der Parametereinstellungen beschränkt, so kann erfindungsgemäß der gesamte Parameterbereich kontinuierlich eingestellt werden. Da die Auswirkung einer geänderten Parametereinstellung sofort festgestellt und beurteilt werden kann, ist eine optimale Wahl der Schneidparameter schnell zu treffen.

Wegen der Wiederholbarkeit von filmisch aufgezeichneten Schneidvorgängen, der Möglichkeit der Vergrößerung und der verlangsamten Darstellung mit Hilfe von Hochgeschwindigkeitsfilmen eignet sich das erfindungsgemäße System in besonderer Weise zur Schulung von Schneidpersonal, als Lehrmittel für Schule und Betrieb aber auch zur Entwicklung neuer Schneideinheiten.

Gute Anwendungsmöglichkeiten bieten sich z.B. beim Brennschneiden zur Untersuchung des Schlackenflusses, der Schlakkenhaftung bzw. des Schlackentransportes, sowie der Einflüsse von Schneidgeschwindigkeit, Düsenabstand, Schneidsauerstoffdruck und der Heizflamme auf die Schnittqualität. Dabei ist die Erstellung von Schneidtabellen ebenso schnell und einfach zu bewerkstelligen wie die Qualitätssicherung von Brennschneiddüsen, da die Düsen bei einer Überprüfung ihrer Funktionstüchtigkeit deutlich zu beobachten sind. Etwaige Fehler in der Geometrie der Schneiddüsen bzw. in der Schneidsauerstoffbohrung sind am Schlackenverlauf schnell zu erkennen. Mit analogen Vorteilen läßt sich eine dem Erfindungsgedanken entsprechende Anlage auch bei Laser- und Plasmaschneiden einsetzen.

Zur Verstellung des radialen Abstandes der Schneideinheit zum Mittelpunkt des Werkstückes ist die Schneideinheit mit Vorteil über einen zur Werkstückebene parallelen Tragarm mit einer in der geometrischen Verlängerung der Drehachse des Drehtisches liegenden Achse verbunden.

Zur Untersuchung von Rotations-Unsymmetrien der Schneideinheit, beispielsweise des Schneidsauerstoffkanals einer Brennschneiddüse, ist die Schneideinheit vorteilhalterweise um ihre Längsachse um 360° drehbar am Tragarm befestigt.

Der Einfluß des Abstandes der Schneideinheit zum Werkstück kann ohne Schwierigkeiten beurteilt werden, da die Schneideinheit im Abstand zum Werkstück verstellbar am Tragarm angeordnet ist. Weiter kann die Schneideinheit in der zur Schneidrichtung senkrechten Ebene geschwenkt werden, womit auch Schrägschnitte der Beobachtung und Beurteilung zugänglich sind.

Zur optischen Erfassung des "Schälprozesses" dient, wie bereits erläutert, eine Kamera, die mit einem Monitor verbunden ist, wenn es einen Schneidvorgang vergrößert darzustellen gilt und eine sofortige Beurteilung des Schneidergebnisses mit einer entsprechenden Korrektur der Schneidparameter vorzunehmen ist. Die Kamera kann ebenso mit einem Bildaufzeichnungsgerät kombiniert werden, das die mehrmalige Wiederholung eines aufgezeichneten Schneidvorganges ermöglicht.

Die Beobachtung eines Schneidvorganges ist grundsätzlich mit jeder freigeführten und von der Schneideinheit unabhängigen Kamera zu bewerkstelligen. Doch hat es sich als günstig erwiesen, die Kamera über ein zur Werkstückebene senkrechtes Stativ und einen weiteren, zur Werkstückebene parallelen Tragarm mit der Schneideinheit zu verbinden. Auf diese Weise kann ein definierter Abstand zwischen der Schneidstelle und dem Objektiv der Kamera eingehalten werden. Das Stativ ist um seine Längsachse drehbar und gegen den Tragarm sowie in vertikaler Richtung verschiebbar. Daher können der horizontale Blickwinkel, die Höheneinstellung der Kamera (Beobachtung ober-, unterhalb oder in der Werkstückebene) sowie der Abstand zur Schneidstelle optimal aufeinander abgestimmt werden.

Zwar wird durch den "Schälprozeß" allein bereits eine erhebliche Verbesserung der Beobachtungsmöglichkeiten erzielt, doch erweist es sich als besonders vorteilhaft, daß die Kamera über den weiteren Tragarm um die Längsachse der Schneideinheit schwenkbar ist. Gerade bei Besäumschnitten läßt sich diese Ausgestaltung nutzen, da die Schneidstellen aus allen Richtungen, die zwischen einer Betrachtung in und entgegen der Schneidrichtung liegen, beobachtet werden kann.

Um die Kamera bei einer Höhenverstellung des sie tragenden Stativs erneut auf die Schneidstelle ausrichten zu können, ist die Kamera um eine zur Werkstückebene parallele Achse schwenkbar am Stativ befestigt. Somit ist sowohl die Schneideinheit als auch die Kamera in alle Richtungen verstellbar.

Im Verlauf eines Schneidprozesses verringert sich der Durchmesser des Werkstückes. Bei einer konstanten Drehzahl des Drehtisches ändert sich damit auch die Schneidgeschwindigkeit. Um die Schneidgeschwindigkeit konstant halten zu können, ist der Drehtisch mit einer dessen Drehzahl regelnden Regeleinheit verbunden, über die aber auch eine willkürliche Erhöhung bzw. Verlangsamung der Drehgeschwindigkeit des Drehtisches und damit der Schneidgeschwindigkeit erreicht werden kann.

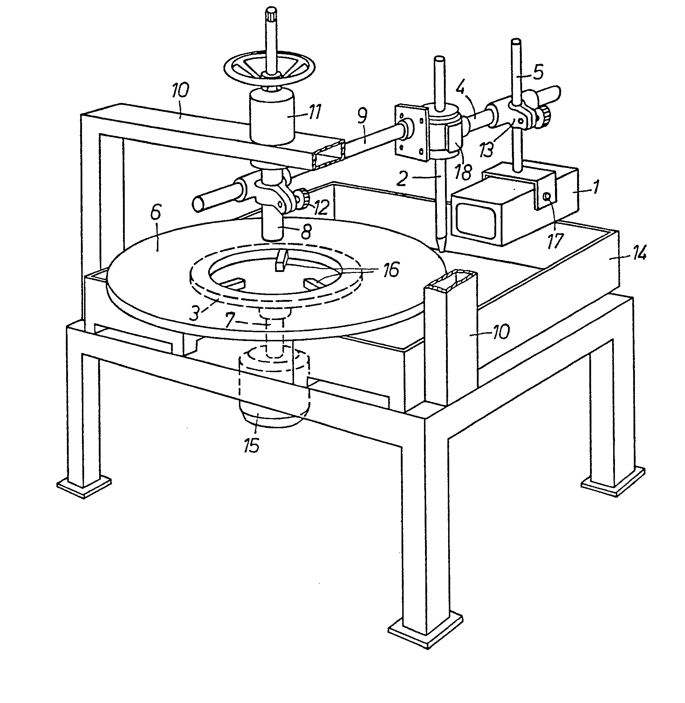

Anhand eines in der Figur schematisch dargestellten Ausführungsbeispieles einer erfindungsgemäßen Anlage soll deren Aufbau und Wirkungsweise näher erläutert werden:

Ein kriesscheibenförmiges Werkstück 6 liegt auf einem horizontal gelagerten Drehtisch 3, der von einem Antrieb 15 in Rotation versetzt wird. Das Werkstück 6 wird mit Hilfe einer Zentriervorrichtung 16 konzentrisch zur Drehachse 7 des Drehtisches 3 ausgerichtet. An einer vibrationsfreien Portalkonstruktion 10, die von einer stabilen Unterkonstruktion getragen wird, ist eine Achse 8 angeordnet, die in vertikaler Richtung über eine in einem Spindelstock 11 geführte Spindel beweglich ist und in der geometrischen Verlängerung der Drehachse 7 des Drehtisches 3 liegt. Der einen Schneidbrenner 2 führende Tragarm 9 ist über ein Verstellglied 12 an der Achse 8 befestigt. Eine Kamera 1, die um eine zur Werkstückebene parallele Achse 17 geschwenkt werden kann, ist über ein Stativ 5, eine Verstelleinrichtung 13 und einen weiteren Tragarm 4 mit dem Schneidbrenner 2 verbunden. Bei einer Veränderung der Schneidbrennerposition wandert die Kamera 1 somit automatisch mit. Nicht dargestellt sind ein mit der Kamera verbundener Monitor bzw. ein Bildaufzeichnungsgerät und die Gasversorgung des Schneidbrenners. Zur Höhenverstellung des Schneidbrenners 2, über die der Abstand des Schneidbrenners zum Werkstück bestimmt wird, dient die im Spindelstock 11 geführte Spindel, während die Radialverstellung des Scheidbrenners über das Verstellglied 12 vorgenommen wird. Durch Lösen und Anziehen nicht dargestellter Klemmschrauben kann der Schneidbrenner einerseits um seine Längsachse gedreht werden, so daß z.B. Rotations-Unsymmetrien des Schneidsauerstoffkanals der Schneiddüse durch Beobachten des Schlackenflüsses leicht festzustellen sind. Zur Beobachtung von Schrägschnitten ist der Schneidbrenner andererseits senkrecht zur Schneidrichtung schwenkbar.

Die Einstellung der Kamera 1 relativ zum Schneidbrenner erfolgt im wesentlichen durch die Schwenkvorrichtung 18 und die Verstelleinrichtung 13. Über die Schwenkeinrichtung 18 kann die Kamera 1 um die Achse des Schneidbrenners bewegt werden, während zur Abstandsänderung zwischen Kamera und Schneidbrenner, sowie zur Höhenverstellung und zum Drehen der Kamera um ihre Achse die das Stativ 5 und den weiteren Tragarm 4 verbindende Verstelleinrichtung 13 dient. Zusammen mit der Schwenkachse 17, über die bei einer Höhenverstellung der Kamera diese erneut auf die Schneidstelle ausgerichtet werden kann, ist die Kamera in alle Richtungen verstellbar.

Hat ein Beobachter eine für seine Untersuchungszwecke günstige Kameraposition gewählt, braucht er nur noch den über den Monitor vergrößert dargestellten Schneidvorgang in Abhängigkeit beispielsweise des Schneidsauerstoffdruckes, der Heizflamme, des Düsenabstandes oder der Schneidgeschwindigkeit zu beurteilen. Die von den Meßgeräten für die genannten Schneidparameter angezeigten Werte können leicht registriert, ihre Auswirkungen auf den Schneidvorgang direkt beobachtet und somit die Schneidparameter schnell optimiert werden.

Unter dem Drehtisch ist eine sandgefüllte, U-förmige Auffangwanne 14 angeordnet, die den Drehtisch 3 und den Antrieb 15 vor den Temperaturen der Schneidflamme und den anfallenden Schlacken schützen soll. Die Auffangwanne ist so konstruiert, daß sie einen möglichst geringen Abstand zum Drehtisch einnimmt und mit einem Gabelstapler von der Brennerseite her ausgetauscht werden kann. Ebenfalls mit dem Stapler kann ein neues Werkstück 6 von der dem Brenner gegenüberliegenden Seite auf den Drehtisch 3 gelegt werden.

## Patentanspruch

Verfahren zur Demonstration von thermischen Schneidvorgängen, dadurch gekennziechnet, daß an einem rotierenden, kreisscheibenförmigen Werkstück mittels einer Schneideinheit ein sich vom Werkstück spiralförmig abwickelnder Span abgetrennt oder ein Besäumschnitt durchgeführt wird, wobei die Schneideinheit nach Beendigung einer Rotation des Werkstückes automatisch um die Spanbreite und/oder um die Schnittbreite dem Werkstück nachgeführt wird, und daß der Schneidvorgang mittels einer Kamera beobachtet und bzw. oder aufgenommen wird, wobei die Kamera im Winkelbereich zwischen Werkstückrand und Span bzw. bei einem Besäumschnitt zwischen dem in Schneidrichtung vor und dem hinter der Schneidstelle liegenden Bereich des Werkstückrandes angeordnet und auf die Schneidstelle gerichtet ist.

## Revendication

Procédé pour la démonstration de processus de coupe thermique, caractérisé en ce qu'à l'aide d'une unité de coupe, on détache d'une pièce à usiner tournante en forme de disque circulaire un copeau se déroulant de la pièce à usiner à la manière d'une spirale, ou bien l'on effectue une coupe de détourage sur la pièce, cependant qu'après achèvement d'un tour de rotation de la pièce à usiner, l'unité de coupe est avancée automatiquement vers ladite pièce d'une distance correspondant à la largeur du copeau et/ou à la largeur de coupe, et en ce que le processus de coupe est observé et/ou enregistré par une caméra orientée vers l'endroit de coupe et disposée dans la zone angulaire entre le bord de la pièce à usiner et le copeau ou respectivement, dans le cas d'une coupe de détourage, entre les zones du bord de la pièce à usiner qui sont situées dans le sens de la coupe, avant et derrière l'endroit de coupe.

## Claim

A method of demonstrating thermal cutting processes, characterised in that by means of a cutting unit, at a rotating, circular disc-shaped workpiece, a chip is separated which unrolls from the workpiece in a spiral fashion, or a trimming cut is carried out, where at the end of one rotation of the workpiece, the cutting unit is automatically readjusted in relation to the workpiece by the width of the chip and/or the width of the cut; and that by means of a camera, the cutting process is observed or recorded, as the case may be, where the camera is arranged in the angular region between the edge of the workpiece and the chip or, in the case of a trimming cut, between the region of the workpiece edge, which considered in the cutting direction, lies in front of the point of cutting, and the region of the workpiece which lies behind the point of cutting, and is directed towards the point of cutting.

**0 002 770**